(19) Europäisches Patentamt
European Patent Office
Office européen des brevets

(11) **EP 4 675 879 A1**

(12) **EUROPEAN PATENT APPLICATION**
published in accordance with Art. 153(4) EPC

(43) Date of publication:
**07.01.2026 Bulletin 2026/02**

(21) Application number: **23805438.1**

(22) Date of filing: **07.09.2023**

(51) International Patent Classification (IPC):
*H02J 3/32* *(2006.01)*

(86) International application number:
**PCT/CN2023/117362**

(87) International publication number:
**WO 2024/164530 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.02.2023 CN 202310145125**

(71) Applicant: **National Engineering Research Center
of Advanced
Energy Storage Materials (Shenzhen) Co., Ltd
Shenzhen, Guangdong 518000 (CN)**

(72) Inventors:
• **ZHONG, Faping**
**Shenzhen, Guangdong 518000 (CN)**
• **ZHAO, Peihong**
**Shenzhen, Guangdong 518000 (CN)**
• **ZHOU, Shuliang**
**Shenzhen, Guangdong 518000 (CN)**

(74) Representative: **AWA Sweden AB
Junkersgatan 1
582 35 Linköping (SE)**

(54) **HYBRID ENERGY STORAGE SYSTEM AND SCHEDULING METHOD THEREOF**

(57) The invention discloses a hybrid energy storage system scheduling system and method, which includes steps S1: the CPU detects whether a scheduling instruction is received in real time, and detects and obtains the maximum power of the power type energy storage medium; S2: when the power value required by the scheduling instruction is greater than When the maximum power of the power-type energy storage medium is reached, the capacity-type energy storage medium is turned on for supplementation, otherwise the power-type energy storage medium is used to respond to the scheduling instruction; S3: While executing step S2, the convolutional neural network output predicts the amplitude of the next scheduling instruction. and duration; S4: Coordinate the two energy storage media to respond to the scheduling instructions according to the predicted amplitude and duration. This hybrid energy storage system scheduling method predicts the amplitude and duration of the next scheduled power command based on the statistical characteristics of historical data, which greatly enhances the controllability of power scheduling. It can also arrange and set the application public power in advance, improving power scheduling. efficiency.

FIG. 1

## Description

### Technical field

The present invention relates to the technical field of energy storage system dispatching, and in particular to a hybrid energy storage system and a dispatching method thereof.

### Background

With the continuous development of energy storage technology, configuring hybrid energy storage systems to smooth power voltage and current fluctuations is an important solution for current energy storage technology. Hybrid energy storage systems can be divided into power-type energy storage and energy-type energy storage. The former, represented by supercapacitors, has the advantages of long life and high power density. By complementing it with battery energy storage, which has the disadvantages of short life and long charge and discharge cycles, optimal utilization of energy storage can be achieved.

However, the energy storage technology that has emerged in the existing technology is not forward-looking enough. It only waits for changes in environmental conditions before making adaptive adjustments. It is unable to predict and arrange adjustments in advance, and its controllability is poor; and although in the existing technology, There are results obtained through artificial intelligence algorithm training, but the original data for artificial intelligence algorithm training is relatively rough, resulting in inaccurate output results; and the adjustment method is relatively backward. In addition, the ambient temperature has a greater impact on the energy storage system, causing the energy storage system to The lifespan is short, and there is no relevant technology to extend the life of the energy storage system.

### SUMMARY

In view of the above problems mentioned in the prior art, in order to solve the above technical problems, the present invention provides a hybrid energy storage system scheduling method, which includes the steps:

S1: The CPU detects in real time whether it receives scheduling instructions and detects and obtains the maximum power of the power-type energy storage medium;

S2: When the power value required by the dispatching instruction is greater than the maximum power of the power-type energy storage medium, the capacity-type energy storage medium is turned on to supplement, otherwise, the power-type energy storage medium is used to respond to the dispatching instruction;

S3: While executing step S2, input the current scheduling instruction requirement parameters, the operating parameters of the power energy storage medium, and the operating parameters of the capacity energy storage medium into the trained convolutional neural network, and the convolutional neural network output predicts the next scheduling instruction. The amplitude and duration;

S4: When the amplitude of the prediction instruction output by the convolutional neural network is less than the maximum power of the power type energy storage medium and the duration is less than the discharge duration of the power type energy storage medium, the power type energy storage medium responds to the scheduling instruction; when the prediction duration is longer than the power type energy storage medium, When the discharge time of the energy storage medium is long, the capacity energy storage medium directly responds to the dispatching command;

When the predicted amplitude exceeds the maximum power that the capacity-type or power-type energy storage medium can respond to alone, both energy storage media jointly respond to the dispatching instructions.

Preferably, the power-type energy storage medium includes the use of nickel metal hydride batteries, lithium titanate batteries, or supercapacitors; the energy-type energy storage medium includes the use of lithium iron phosphate batteries, lead-acid batteries, or lead-carbon batteries.

Preferably, the dispatching instruction requirement parameters, the operating parameters of the power type energy storage medium, and the capacity type energy storage medium operating parameters, wherein the dispatching instruction requirement parameters include the maximum power value, duration, instruction issuing time, and instruction issuing button required by the dispatching instruction. Duration; the operating parameters of the power energy storage medium include the maximum power of the power energy storage medium, the charge capacity of the power energy storage medium, the operating time of the power energy storage medium, and the maximum current value of the power energy storage medium; capacity The operating parameters of the capacity-type energy storage medium include the maximum power of the capacity-type energy storage medium, the charging capacity of the capacity-type energy storage medium, the operating time of the capacity-type energy storage medium, and the maximum current value of the capacity-type energy storage medium.

Preferably, the trained convolutional neural network is trained by the following training steps: S21: Divide 24 hours a day into 288 5-minute time periods; S22: Perform FFT transformation on the power instructions of each time period; S23 conducts convolutional neural network training on the amplitude-frequency characteristics of the power command in each time period; S24 trains the convolutional neural network.

Preferably, the FFT frequency conversion of the power command includes: S221: Determine the total power configuration of the hybrid storage system based on the power command amplitude;

S222: Count the duration period of low-frequency instructions, and determine the energy storage time of the capacity energy storage medium based on the period statistics;

S223: Statistics of the cycle characteristics of high-frequency instructions, and the energy storage duration of the power-type energy storage medium is determined from the high-frequency instruction cycle statistics;

S224: Statistics of the amplitude characteristics of low-frequency commands to determine the power ratio of the capacity energy storage medium;

S224: Statistics on the amplitude characteristics of high-frequency commands and determine the power ratio of the power energy storage medium.

Preferably, the convolutional neural network uses an improved loss function V:

$$V = -\frac{U_i}{N} \sum_{i=1}^{N} \ln \frac{e^{s(\tan\theta_i + m)} \cdot \quad \cdots \cdots}{e^{s(\tan(\theta_i+m))} + e^{\tan\theta_i}}$$

$$U_i = y_i \ln(p_i) + (1 - y_i)(1 - \ln(p_i))$$

Among them,, $p_i$ represents the ratio of the number of times the i-th time period sample appears in historical samples to the total number of all historical samples, $y_i$ Represented as a feature vector composed of scheduling command requirement parameters. The scheduling command requirement parameters include the maximum power value required by the scheduling command, the required duration of the scheduling command, the command issuance time, and the command issuance button duration. N=288 means that 24 hours a day is divided into 288 In the 5-minute time period, s represents the maximum power value required by the scheduling instruction, m represents the required duration of the scheduling instruction,, $\tan\theta_i$ Represents the tangent value of the sample vector in the i-th time period and the historical average standard eigenvector.

The invention also provides a hybrid energy storage dispatching system, including: a control system, a power conversion system, a power type energy storage medium, and an energy type energy storage medium;

The power type energy storage medium and the energy type energy storage medium are respectively connected to the power grid through independent power conversion systems. The power type energy storage medium and energy type energy storage medium are respectively connected to the control system; the control system controls the power type storage through communication connections and switching switches. Energy media, energy storage media and power converters;

There are two sets of virtual energy storage units in the control system, which store the protection parameters and operating parameters of power-type energy storage media and energy-type energy storage media respectively;

When the storage power energy storage medium is connected to the power conversion system, the control system enables the protection operation parameters of the virtual storage power energy storage medium to realize the operation scheduling and protection of the storage power energy storage medium;

When the energy-type energy storage medium is connected to the power conversion system, the control system enables the operation protection parameters of the virtual energy-type energy storage medium to realize the operation scheduling and protection of the energy-type energy storage medium; wherein, the control system is configured to be controlled by the The processor of the control system executes the method according to claim 1.

Preferably, the power-type energy storage medium includes the use of nickel metal hydride batteries, lithium titanate batteries, or supercapacitors; the energy-type energy storage medium includes the use of lithium iron phosphate batteries, lead-acid batteries, or lead-carbon batteries.

Preferably, the power-type energy storage medium uses high-rate nickel-hydrogen batteries suitable for low-temperature operation, and the energy-type energy storage medium includes a hybrid energy storage system using lithium iron phosphate batteries.

Preferably, the nickel-metal hydride battery pack and the lithium iron phosphate battery pack are installed in a sealed space in a container and placed at intervals; when the temperature is low, the charging and discharging of the nickel-metal hydride battery is started first, and the heat generated by its charging and discharging losses is used to recharge the sealed space and the lithium iron phosphate battery. heating;

Start charging and discharging the lithium iron phosphate battery after the ambient temperature in the confined space rises.

The present invention provides a hybrid energy storage system and a dispatching method thereof. The beneficial technical effects that can be achieved are as follows:

1. Based on the statistical characteristics of historical data, the amplitude and duration of the next scheduled power command are predicted, which greatly enhances the controllability of power scheduling. The exposed power of the application can be arranged and set in advance, which improves the efficiency of power scheduling.

2. By constructing training data, the algorithm is greatly improved. Specifically, 24 hours a day is divided into 288 5-minute time periods, FFT analysis is performed on the power instructions of each time period, and the power of each time period is studied and summarized. Command amplitude-frequency characteristics, construct a convolutional neural network algorithm, and greatly improve prediction accuracy.

3. Based on the comparison between the predicted amplitude and the maximum power of the power energy storage medium and the power of the capacitive energy storage medium, and the comparison of the predicted duration with the discharge time of the power energy storage medium and the discharge time of the capacitive energy storage medium, the dynamic The response to scheduling instructions greatly enhances the flexibility and scalability of the system.

4. In application conditions where the ambient temperature is lower than 0 degrees for a long time, the heating loss of the lithium iron phosphate energy storage system is large, and the low temperature environment affects the battery cycle life. High-rate nickel-metal hydride batteries and lithium iron phosphate batteries suitable for low-temperature operation are used to form a hybrid storage system. energy system. Greatly increases battery life.

5. Use the improved loss function as V, the improved loss function uses In as the natural logarithm, and adjust the convolutional neural network by adjusting the tangent value of the sample vector in the i-th time period and the historical average standard feature vector, so that The learning ability is greatly enhanced and the prediction accuracy is greatly enhanced.

## BRIEF DESCRIPTION OF THE DRAWINGS

In order to explain the embodiments of the present invention or the technical solutions in the prior art more clearly, the drawings needed to be used in the description of the embodiments or the prior art will be briefly introduced below. Obviously, the drawings in the following description are only These are some embodiments of the present invention. For those of ordinary skill in the art, other drawings can be obtained based on these drawings without exerting creative efforts.

Figure 1 is a schematic diagram of a hybrid energy storage system of the present invention;
Figure 2 is an FFT frequency analysis diagram of the power command of the hybrid energy storage system of the present invention;

## DETAILED DESCRIPTION

The technical solutions in the embodiments of the present invention will be clearly and completely described below with reference to the accompanying drawings in the embodiments of the present invention. Obviously, the described embodiments are only some of the embodiments of the present invention, rather than all the embodiments. Based on the embodiments of the present invention, all other embodiments obtained by those of ordinary skill in the art without making creative efforts fall within the scope of protection of the present invention.

Example 1:

Compared with traditional energy storage scheduling systems, embodiments of the present invention provide a hybrid energy storage system scheduling method that predicts the amplitude and duration of the next scheduling power command based on the statistical characteristics of historical data, and then predicts the amplitude and duration of the next scheduling power command in advance. Making scheduling arrangements provides scheduling flexibility and includes steps:

S1: The CPU detects in real time whether it has received the scheduling instruction, and detects and obtains the maximum power of the power-type energy storage medium;
S2: When the power value required by the dispatching instruction is greater than the maximum power of the power-

type energy storage medium, the capacity-type energy storage medium is turned on to supplement, otherwise, the power-type energy storage medium is used to respond to the dispatching instruction;

S3: While executing step S2, input the current scheduling instruction requirement parameters, the operating parameters of the power energy storage medium, and the operating parameters of the capacity energy storage medium into the trained convolutional neural network, and the convolutional neural network output predicts the next scheduling instruction. The amplitude and duration;

S4: When the amplitude of the prediction instruction output by the convolutional neural network is less than the maximum power of the power type energy storage medium and the duration is less than the discharge duration of the power type energy storage medium, the power type energy storage medium responds to the scheduling instruction; when the prediction duration is longer than the power type energy storage medium, When the discharge time of the energy storage medium is long, the capacity energy storage medium directly responds to the dispatching command;

When the predicted amplitude exceeds the maximum power that the capacity-type or power-type energy storage medium can respond to alone, both energy storage media jointly respond to the dispatching instructions.

In some embodiments, the power-type energy storage medium includes using nickel metal hydride batteries, lithium titanate batteries, or supercapacitors; the energy-type energy storage medium includes using lithium iron phosphate batteries, lead-acid batteries, or lead-carbon batteries.

In some embodiments, the scheduling instruction requirement parameters, the operating parameters of the power energy storage medium, and the capacity energy storage medium operating parameters, wherein the scheduling instruction requirement parameters include the maximum power value, duration, and instruction issuance time required by the scheduling instruction, The length of time the command is issued; the operating parameters of the power energy storage medium include the maximum power of the power energy storage medium, the charge capacity of the power energy storage medium, the operating time of the power energy storage medium, and the maximum current of the power energy storage medium. value; the operating parameters of the capacity-type energy storage medium include the maximum power of the capacity-type energy storage medium, the charge capacity of the capacity-type energy storage medium, the operating time of the capacity-type energy storage medium, and the maximum current value of the capacity-type energy storage medium.

In some embodiments, the trained convolutional neural network is trained by the following training steps: S21: Divide 24 hours a day into 288 5-minute time periods; S22: Perform power instructions for each time period. FFT transformation; S23 performs convolutional neural network training on the amplitude-frequency characteristics of the power command in each time period; S24 trains to complete the convolutional neural network.

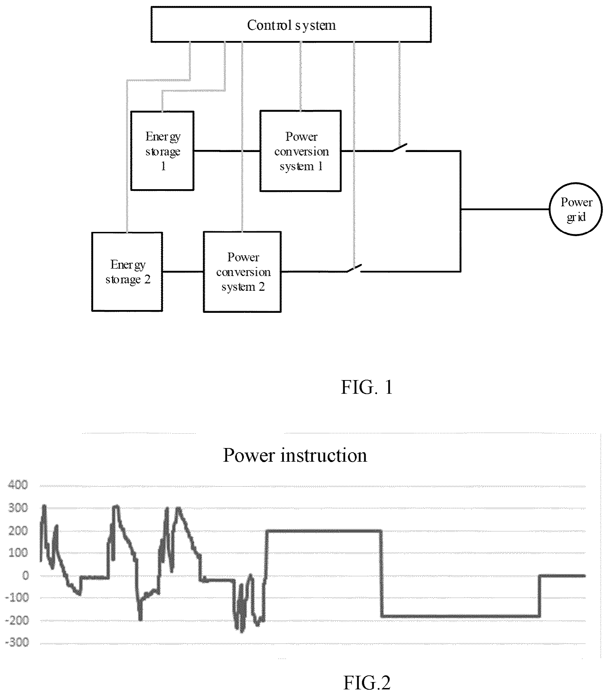

In some embodiments, as shown in Figure 2, the FFT frequency transformation of the power command includes: S221: Determine the total power configuration of the hybrid storage system based on the power command amplitude;

In some embodiments: counting the duration cycles of low-frequency instructions, and determining the energy storage duration of the capacity-type energy storage medium based on the statistical data of the cycles;

In some embodiments: the periodic characteristics of high-frequency instructions are counted, and the energy storage duration of the power-type energy storage medium is determined from the high-frequency instruction cycle statistical data;

In some embodiments: statistics on the amplitude characteristics of low-frequency commands are used to determine the power ratio of the capacity energy storage medium;

In some embodiments: the amplitude characteristics of high-frequency commands are collected and the power ratio of the power energy storage medium is determined.

In some embodiments, the convolutional neural network uses an improved loss function V:

$$V = -\frac{U_i}{N}\sum_{i=1}^{N}\ln\frac{e^{s(\tan\theta_i + m)}}{e^{s(\tan(\theta_i + m)} + e^{\tan\theta_i}}$$

$$U_i = y_i\ln(p_i) + (1 - y_i)(1 - \ln(p_i))$$

Among them,, $p_i$ represents the ratio of the number of times the i-th time period sample appears in historical samples to the total number of all historical samples, $y_i$ Represented as a feature vector composed of scheduling command requirement parameters. The scheduling command requirement parameters include the maximum power value required by the scheduling command, the required duration of the scheduling command, the command issuance time, and the command issuance button duration. N=288 means that 24 hours a day is divided into 288 In the 5-minute time period, s represents the maximum power value required by the scheduling instruction, m represents the required duration of the scheduling instruction,, $\tan \theta_i$ Represents the tangent value of the sample vector in the i-th time period and the historical average standard eigenvector.

The invention also provides a hybrid energy storage dispatching system. The energy storage medium shares a set of power conversion systems, and different energy storage media realize time-sharing sharing of the power conversion system through switching circuits and control and protection systems. As shown in Figure 1, it includes: control system, power conversion system, power-type energy storage medium, and energy-type energy storage medium;

Energy storage 1 and energy storage 2 are composed of power type and capacity type energy storage media respectively. The power type energy storage medium mainly uses nickel metal hydride batteries, lithium titanate batteries, supercapacitors, etc., and the energy type energy storage medium mainly uses lithium iron phosphate batteries. , lead-acid batteries, lead-carbon batteries, etc., the power conversion system is a universal power converter

The DC bus of Energy Storage 1 and Energy Storage 2 is connected to the DC bus of the power converter through a switch. The DC voltage range of Energy Storage 1 and Energy Storage 2 is within the DC bus voltage range of the power converter. Energy Storage 1 and Energy Storage 2 They are connected to the control system respectively, and their protection parameters are stored in the control system. The control system controls the connection between the energy storage and the power converter through the switch. There are two sets of virtual energy storage units in the control system, which store energy storage 1 and energy storage 2 respectively. Protection parameters and operating parameters. When energy storage 1 is connected to the power conversion system, the control system enables the protection operating parameters of virtual energy storage unit 1 to realize the operation scheduling and protection of energy storage 1. Energy storage 2 is connected to the power conversion system. When , the control system enables the operation protection parameters of the virtual energy storage unit 2 to realize the operation scheduling and protection of the energy storage unit 2.

The power type energy storage medium and the energy type energy storage medium are respectively connected to the power grid through independent power conversion systems. The power type energy storage medium and energy type energy storage medium are respectively connected to the control system; the control system controls the power type storage through communication connections and switching switches. Energy medium, energy-type energy storage medium and power converter, power-type energy storage medium, energy-type energy storage medium are connected to the DC bus of the power converter through a DC bus through a switch; power-type energy storage medium, energy-type energy storage medium The DC voltage range is within the DC bus voltage range of the power converter; the power type energy storage medium and the energy type energy storage medium are connected to the control system respectively; the control system controls the power type energy storage medium, energy type energy storage medium and power converter;

There are two sets of virtual energy storage units in the control system, which store the protection parameters and operating parameters of power-type energy storage media and energy-type energy storage media respectively;
When the storage power energy storage medium is connected to the power conversion system, the control system enables the protection operation parameters of the virtual storage power energy storage medium to realize the operation scheduling and protection of the storage power energy storage medium;
When the energy-type energy storage medium is connected to the power conversion system, the control system enables the operation protection parameters of the virtual energy-type energy storage medium to realize the operation scheduling and protection of the energy-type energy storage medium; wherein, the control system is configured to be controlled by the The processor of the control system executes the method according to claim 1.

In some embodiments, the power-type energy storage medium includes using nickel metal hydride batteries, lithium titanate batteries, or supercapacitors; the energy-type energy storage medium includes using lithium iron phosphate batteries, lead-acid batteries, or lead-carbon batteries.

In some embodiments, the power-type energy storage medium uses high-rate nickel-metal hydride batteries suitable for low-temperature operation, and the energy-type energy storage medium uses lithium iron phosphate batteries to form a hybrid energy storage system.

In some embodiments, in application conditions where the ambient temperature is lower than 0 degrees for a long time, the heating loss of the lithium iron phosphate energy storage system is large, and the low temperature environment affects the battery cycle life. A hybrid energy storage system is formed using high-rate nickel-metal hydride batteries and lithium iron phosphate batteries suitable for low-temperature operation. The nickel-metal hydride battery pack and the lithium iron phosphate battery pack are installed in a closed space in a container and placed at intervals; when the temperature is low, the charge and discharge of the nickel-metal hydride battery is started first, and the heat generated by its charge and discharge loss is used to heat the closed space and the lithium iron phosphate battery;

Start charging and discharging the lithium iron phosphate battery after the ambient temperature in the confined space rises.

The present invention provides a hybrid energy storage system and a dispatching method thereof. The beneficial technical effects that can be achieved are as follows:

1. Based on the statistical characteristics of historical data, the amplitude and duration of the next scheduled power command are predicted, which greatly enhances the controllability of power scheduling. The exposed power of the application can be arranged and set in advance, which improves the efficiency of power scheduling.

2. By constructing training data, the algorithm is greatly improved. Specifically, 24 hours a day is divided into 288 5-minute time periods, FFT analysis is performed on the power instructions of each time period, and the power of each time period is studied and summarized. Command amplitude-frequency characteristics, construct a convolutional neural network algorithm, and greatly improve prediction accuracy.

3. Based on the comparison between the predicted amplitude and the maximum power of the power energy storage medium and the power of the capacitive energy storage medium, and the comparison of the predicted duration with the discharge time of the power energy storage medium and the discharge time of the capacitive energy storage medium, the dynamic The response to scheduling instructions greatly enhances the flexibility and scalability of the system.

The above is a detailed introduction to an electronic data certification association method. This article uses specific examples to illustrate the principles and implementation methods of the present invention. The description of the above embodiments is only used to help understand the core idea of the present invention; at the same time, , for those of ordinary skill in the art, there will be changes in the specific implementation and application scope based on the ideas and methods of the present invention. In summary, the content of this description should not be understood as a limitation of the present invention.

**Claims**

1. A dispatching method of hybrid energy storage system , **characterized by** including the steps:

   S1: The CPU detects in real time whether it receives scheduling instructions and detects and obtains the maximum power of the power-type energy storage medium;

   S2: When the power value required by the dispatching instruction is greater than the maximum power of the power-type energy storage medium, the capacity-type energy storage medium is turned on to supplement, otherwise, the power-type energy storage medium is used to respond to the dispatching instruction;

   S3: While executing step S2, input the current scheduling instruction requirement parameters, the operating parameters of the power energy storage medium, and the operating parameters of the capacity energy storage medium into the trained convolutional neural network, and the convolutional neural network output predicts the next scheduling instruction. The amplitude and duration;

   S4: When the amplitude of the prediction instruction output by the convolutional neural network is less than the maximum power of the power type energy storage medium and the duration is less than the discharge duration of the power type energy storage medium, the power type energy storage medium responds to the scheduling instruction; when the prediction duration is longer than the power type energy storage medium, When the discharge time of the energy storage medium is long, the capacity energy storage medium directly responds to the dispatching command;

   When the predicted amplitude exceeds the maximum power that the capacity-type or power-type energy storage medium can respond to alone, both energy storage media jointly respond to the dispatching instructions.

2. A dispatching method of hybrid energy storage system according to claim 1, **characterized in that** the power type energy storage medium includes using nickel metal hydride batteries, lithium titanate batteries or supercapacitors; the energy type energy storage medium Including the use of lithium iron phosphate batteries or lead-acid batteries or lead-carbon batteries.

3. A dispatching method of hybrid energy storage system according to claim 2, **characterized in that** the scheduling instruction requires parameters, operating parameters of the power type energy storage medium, and capacity type energy storage medium operating parameters, wherein the scheduling instruction requires Parameters include the maximum power value, duration, and instruction issuance time required by the dispatching instruction; the operating parameters of the power energy storage medium include the maximum power of the power energy storage medium, the charge capacity of the power energy storage medium, and the The operating time and the maximum current value of the power-type energy storage medium; the operating parameters of the capacity-type energy storage medium include the maximum power of the capacity-type energy storage medium, the charging capacity of the capacity-type energy storage medium, the operation time and capacity of the capacity-type energy storage medium. The maximum current value of type energy storage medium.

4. A dispatching method of hybrid energy storage system according to claim 2, **characterized in that** the trained convolutional neural network is trained by the following training steps: S21: Divide 24 hours a day into 288 5-hour periods. minute time period; S22: perform FFT transformation on the power command in each time period; S23 conducts convolutional neural network training on the amplitude-frequency characteristics of the power command in each time period; S24 trains to complete the convolutional neural network.

5. A dispatching method of hybrid energy storage systemaccording to claim 1, **characterized in that** the convolutional neural network adopts an improved loss function V:

$$V = -\frac{U_i}{N} \sum_{i=1}^{N} \ln \frac{e^{s(\tan \theta_i + m)}}{e^{s(\tan(\theta_i + m))} + e^{\tan \theta_i}}$$

$$U_i = y_i \ln(p_i) + (1 - y_i)(1 - \ln(p_i))$$

Among them,, $p_i$ represents the ratio of the number of times the i-th time period <u>sample appears in historical samples to the total number of all historical</u> samples, $y_i$ Represented as a feature vector composed of scheduling command requirement parameters. The scheduling command requirement parameters include the maximum power value required by the scheduling command, the required duration of the scheduling command, the command issuance time, and the command issuance button duration. N=288 means that 24 hours a day is divided into 288 In the 5-minute time period, s represents the maximum power value required by the scheduling instruction, m represents the required duration of the scheduling instruction,, $\tan \theta_i$ Represents the tangent value of the sample vector in the i-th time period and the historical average standard eigenvector.

6. Ahybrid energy storage system, **characterized by** including: a control system, a power conversion system, a power type energy storage medium, and an energy type energy storage medium;

The power type energy storage medium and the energy type energy storage medium are respectively connected to the power grid through independent power conversion systems. The power type energy storage medium and energy type energy storage medium are respectively connected to the control system; the control system controls the power type storage through communication connections and switching switches. Energy media, energy storage media and power converters;
There are two sets of virtual energy storage units in the control system, which store the protection parameters and operating parameters of power-type energy storage media and energy-type energy storage media respectively;
When the storage power energy storage medium is connected to the power conversion system, the control system enables the protection operation parameters of the virtual storage power energy storage medium to realize the operation scheduling and protection of the storage power energy storage medium;
When the energy-type energy storage medium is connected to the power conversion system, the control system enables the operation protection parameters of the virtual energy-type energy storage medium to realize the operation scheduling and protection of the energy-type energy storage medium; wherein, the control system is configured to be controlled by the The processor of the control system executes the method according to claim 1.

7. Ahybrid energy storage system according to claim 6, wherein the power-type energy storage medium includes nickel metal hydride batteries, lithium titanate batteries or supercapacitors; and the energy-type energy storage medium includes lithium iron phosphate batteries or lead-acid batteries or lead-carbon batteries.

FIG. 1

FIG.2

## INTERNATIONAL SEARCH REPORT

| International application No. |
| --- |
| **PCT/CN2023/117362** |

### A.  CLASSIFICATION OF SUBJECT MATTER

H02J3/32(2006.01)i

According to International Patent Classification (IPC) or to both national classification and IPC

### B.  FIELDS SEARCHED

Minimum documentation searched (classification system followed by classification symbols)

IPC:H02J

Documentation searched other than minimum documentation to the extent that such documents are included in the fields searched

Electronic data base consulted during the international search (name of data base and, where practicable, search terms used)

CNABS; CNTXT; USTXT; WOTXT; EPTXT; DWPI; VEN; CNKI; IEEE: 混合储能, 调度, 检测, 最大功率, 预测, 神经网络, 幅值, 时长, hybrid energy storage, dispatch, detect, maximum power, predict, neural network, amplitude, duration

### C.  DOCUMENTS CONSIDERED TO BE RELEVANT

| Category* | Citation of document, with indication, where appropriate, of the relevant passages | Relevant to claim No. |
| --- | --- | --- |
| PX | CN 116436059 A (SHENZHEN NATIONAL ENGINEERING RESEARCH CENTER OF ADVANCED ENERGY STORAGE MATERIALS CO., LTD.) 14 July 2023 (2023-07-14) description, paragraphs 2-75, and figures 1-2 | 1-7 |
| A | CN 104362658 A (STATE GRID CORPORATION OF CHINA et al.) 18 February 2015 (2015-02-18) description, paragraphs 6-45, and figures 1-2 | 1-7 |
| A | CN 112103980 A (INSTITUTE OF ELECTRICAL ENGINEERING, CHINESE ACADEMY OF SCIENCES) 18 December 2020 (2020-12-18) description, paragraphs 6-130, and figures 1-6 | 1-7 |
| A | CN 112952957 A (STATE GRID NINGXIA ELECTRIC POWER CO., LTD. et al.) 11 June 2021 (2021-06-11) entire document | 1-7 |
| A | CN 113725850 A (NORTH CHINA UNIVERSITY OF TECHNOLOGY) 30 November 2021 (2021-11-30) entire document | 1-7 |

☑ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 November 2023** | **24 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/117362** |

| C. | DOCUMENTS CONSIDERED TO BE RELEVANT | |
|---|---|---|
| Category* | Citation of document, with indication, where appropriate, of the relevant passages | Relevant to claim No. |
| A | CN 114217530 A (ZHONGSHAN DONLIM WEILIELECTRICAL APPLIANCES CO., LTD.) 22 March 2022 (2022-03-22)<br>entire document | 1-7 |
| A | US 2008211230 A1 (REXORCE THERMIONICS, INC.) 04 September 2008 (2008-09-04)<br>entire document | 1-7 |

Form PCT/ISA/210 (second sheet) (July 2022)

**INTERNATIONAL SEARCH REPORT**
Information on patent family members

| International application No. |
| --- |
| **PCT/CN2023/117362** |

| Patent document cited in search report | | | Publication date (day/month/year) | Patent family member(s) | | | Publication date (day/month/year) |
| --- | --- | --- | --- | --- | --- | --- | --- |
| CN | 116436059 | A | 14 July 2023 | None | | | |
| CN | 104362658 | A | 18 February 2015 | None | | | |
| CN | 112103980 | A | 18 December 2020 | CN | 112103980 | B | 12 April 2022 |
| CN | 112952957 | A | 11 June 2021 | None | | | |
| CN | 113725850 | A | 30 November 2021 | None | | | |
| CN | 114217530 | A | 22 March 2022 | CN | 114217530 | B | 08 November 2022 |
| US | 2008211230 | A1 | 04 September 2008 | US | 8099198 | B2 | 17 January 2012 |
| | | | | WO | 2008039725 | A2 | 03 April 2008 |
| | | | | WO | 2008039725 | A3 | 12 September 2008 |
| | | | | EP | 2080076 | A2 | 22 July 2009 |
| | | | | JP | 2010504733 | W | 12 February 2010 |

Form PCT/ISA/210 (patent family annex) (July 2022)